# EUROPEAN PATENT APPLICATION

(11) **EP 2 685 742 A2**
(43) Date of publication of application: **15.01.2014**
(21) Application number: 11744259.0
(22) Date of filing: 07.04.2011
(51) Int. Cl.: H04N 21/643

(54) **METHOD, DEVICE AND SYSTEM FOR TRANSMITTING AND PROCESSING MEDIA CONTENT**

(71) Applicant: Huawei Technologies Co., Ltd., Shenzhen, Guangdong 518129 (CN)
(72) Inventor: YUAN, Weizhong, Shenzhen Guangdong 518129 (CN); SHI, Teng, Shenzhen Guangdong 518129 (CN); YUE, Peiyu, Shenzhen Guangdong 518129 (CN); ZHANG, Renzhou, Shenzhen Guangdong 518129 (CN); WU, Lingyan, Shenzhen Guangdong 518129 (CN)
(74) Representative: Körber, Martin Hans
(86) International application number: PCT/CN2011/072511
(87) International publication number: WO 2011/100901

(57) **Abstract**

A method, an apparatus, and a system for transmitting and processing media content. The method includes: encapsulating at least one media sample and metadata thereof to generate a sub-media segment, where a plurality of the sub-media segments constitute one media segment; and each time one sub-media segment is generated, pushing the sub-media segment to a live streaming server such that the live streaming server, upon receiving the sub-media segment, pushes the sub-media segment to a client side for playing. The technical solutions according to embodiments of the present invention reduce the end-to-end delay and improve real-time performance of the media content processing.

## Description

### FIELD OF TECHNOLOGY

The present invention relates to the field of communications technologies, and in particular, to a method, an apparatus, and a system for transmitting and processing media content.

### BACKGROUND

A user may acquire media content over a terminal and play the acquired media content in various manners which typically include downloading a file through HTTP (Hypertext Transfer Protocol, Hypertext Transfer Protocol), or P2P (Peer to Peer, Peer to Peer) to a local disk and playing the downloaded file, traditional streaming media manner, live streaming/on-demand streaming online based on P2P streaming media, HTTP progressive download (HTTP Progressive Download), dynamic HTTP stream transmission solution, and the like. The dynamic HTTP stream transmission solution, as a streaming media transmission solution, needs to take into consideration of its provided quality of end-user experience (Quality of end-user Experience, QoE) and quality of service (Quality of Service, QoS). With respect to a live streaming scenario, an end-to-end delay/latency (end-to-end delay/latency) in an entire solution is a very critical factor, which is typically defined as a delay between occurrence of a real-world event and the time when (a first sample) is played on a client side.

Currently, the dynamic HTTP stream transmission solution employs a media segment (Media Segment) as a basic unit in processing and transmitting live streaming services. Each media segment needs to contain corresponding media sample (sample) data of the media segment. Therefore, to generate a media segment, a head-end encoder needs to wait for at least one media segment duration for acquiring live streaming event data with the corresponding duration and generating a corresponding sample by encoding the data. The client side selects a media segment having a corresponding bit rate according to an available bandwidth thereof, downloads and acquires the media segment having the bit rate. This process also consumes a period of time close to the media segment duration. With respect to the dynamic HTTP stream transmission solution, the end-to-end delay during live streaming may be involved in: capture of live streaming event data by devices such as a camera, output of a media segment by an encoder, transmission delay of the media segment from the encoder to a server and from the server to a client side, buffering delay of the server, initial buffering delay of the client side, and decoding and playing on a client side. Delays in the capture of the live streaming event data by devices such as the camera, encoding and output of the media segment by the encoder, and decoding and playing on the client side are relatively fixed delays, and are slightly affected by the employed media transmission solution. In this way, the end-to-end delay may be shortened by shortening the media segment duration and shortening the durations of the buffering of the server and the initial buffering of the client side.

However, in the DASH (Dynamic adaptive streaming over HTTP, dynamic adaptive streaming over HTTP) commission draft (the International Organization for Standardization, International Organization for Standardization/the International Electrotechnical Commission, International Electrotechnical Commission, ISO/IEC CD 23001-6) of the MPEG (Moving Picture Experts Group, Moving Picture Experts Group), it is clearly defined that each media segment needs to contain at least one random access point (Random Access Point/Representation Access point, RAP). Therefore, shortening of the media segment duration will result in the following problems:
(1) When media content with the same duration is played, because each media segment needs to be acquired by sending a request message, the number of request messages from the client side is increased, and therefore processing workload of the client side and the server is increased, and meanwhile an effective load rate (a ratio of media content data volume to the total transmission data volume) of the HTTP messages is decreased.
(2) Each media segment contains a random access point. Therefore, shortening of the media segment will result in shortening of the time interval between two adjacent random access points, thereby decreasing encoding efficiency and increasing network transmission load.

### SUMMARY

Embodiments of the present invention provide a method, an apparatus, and a system for transmitting and processing media content, to reduce an end-to-end delay and enhance real-time performance of media content transmission.

In one aspect, an embodiment of the present invention provides a method for transmitting and processing media content. The method includes: encapsulating at least one media sample and metadata thereof to generate a sub-media segment, where a plurality of the sub-media segments constitute one media segment; and each time one sub-media segment is generated, pushing the sub-media segment to a live streaming server such that the live streaming server, upon receiving the sub-media segment, pushes the sub-media segment to a client side for playing.

In another aspect, an embodiment of the present invention further provides a method for transmitting and processing media content. The method includes: receiving a sub-media segment pushed by a live streaming encoder, where the sub-media segment is one of a plurality of sub-media segments constituting a media segment, and each sub-media segment is generated by encapsulating at least one media sample and metadata thereof; and each time one sub-media segment is received, pushing the sub-media segment to a client side for playing.

In still another aspect, an embodiment of the present invention further provides a method for transmitting and processing media content. The method includes: sending a media segment request message to a live streaming server; receiving a sub-media segment pushed by the live streaming server, where the sub-media segment is one of a plurality of sub-media segments constituting a media segment corresponding to the request message, and each sub-media segment is generated by encapsulating at least one media sample and metadata thereof; and each time one sub-media segment is received, playing the sub-media segment.

In still another aspect, an embodiment of the present invention provides a live streaming encoder. The live streaming encoder includes: an encapsulation unit, configured to encapsulate at least one media sample and metadata thereof to generate a sub-media segment, where a plurality of the sub-media segments constitute one media segment; and a pushing unit, configured to: each time one sub-media segment is generated, push the sub-media segment to a live streaming server such that the live streaming server, upon receiving the sub-media segment, pushes the sub-media segment to a client side for playing.

In still another aspect, an embodiment of the present invention provides a live streaming server. The live streaming server includes: a receiving unit, configured to receive a sub-media segment pushed by a live streaming encoder, where the sub-media segment is one of a plurality of sub-media segments constituting one media segment, and each sub-media segment is generated by encapsulating at least one media sample and metadata thereof; and a pushing unit, configured to: each time one sub-media segment is received, push the sub-media segment to a client side for playing.

In still another aspect, an embodiment of the present invention provides a client side. The client side includes: a requesting unit, configured to send a media segment request message to a live streaming server; a receiving unit, configured to receive a sub-media segment pushed by the live streaming server, where the sub-media segment is one of a plurality of sub-media segments constituting a media segment corresponding to the request message, and each sub-media segment is generated by encapsulating at least one media sample and metadata thereof; and a playing unit, configured to: each time one sub-media segment is received, play the sub-media segment.

In yet still another aspect, an embodiment of the present invention provides a system for transmitting and processing media content. The system includes: a live streaming encoder, configured to: encapsulate at least one media sample and metadata thereof to generate a sub-media segment, where a plurality of the sub-media segments constitute one media segment; and each time one sub-media segment is generated, push the sub-media segment to a live streaming server; the live streaming server, configured to: receive the sub-media segment pushed by the live streaming encoder; and each time one sub-media segment is received, push the sub-media segment to a client side; and the client side, configured to: send a media segment request message to the live streaming server; receive the sub-media segment pushed by the live streaming server, wherein the sub-media segment is one of a plurality of sub-media segments constituting a media segment corresponding to the request message; and each time one sub-media segment is received, play the sub-media segment.

In the technical solutions according to embodiments of the present invention, a plurality of sub-media segments constituting each media segment are generated on the side of a live streaming encoder. In this way, it is unnecessary to push a media segment to a live streaming server after the entire media segment is generated. Instead, each time a sub-media segment is generated, the sub-media segment is pushed to the live streaming server, and is pushed to a client side for playing by the live streaming server. This manner improves real-time performance of media content transmission, and solves the issue of the end-to-end delay, shortens delays in such operations as initial playing, dragging, and quick channel switching of the client side. In the case of no long-duration server buffer/client side initial buffer, quick and timely response and adjustment can be made to sharp changes of the network conditions.

In addition, basic units requested by the client side are still media segments, and the number of request messages remains the same as the original number, neither increasing processing workload of the client side and the server, nor reducing the effective load rate of HTTP messages. A time interval between two adjacent random access points is not shortened. Therefore, encoding efficiency will not be reduced and network transmission load will not be increased.

### BRIEF DESCRIPTION OF THE DRAWINGS

To illustrate the technical solutions in embodiments of the present invention or in the prior art more clearly, the following briefly describes the accompanying drawings required for describing embodiments or the prior art. Apparently, the accompanying drawings in the following description merely show some embodiments of the present invention, and persons of ordinary skill in the art can derive other drawings from these accompanying drawings without creative efforts. Among the drawings:
FIG. 1 is a first flowchart of a method for transmitting and processing media content according to an embodiment of the present invention;
FIG. 2 is a first schematic diagram of a corresponding relationship between a media segment and a sub-media segment according to an embodiment of the present invention;
FIG. 3 is a second schematic diagram of a corresponding relationship between a media segment and a sub-media segment according to an embodiment of the present invention;
FIG. 4 is a second flowchart of a method for transmitting and processing media content according to an embodiment of the present invention;
FIG. 5 is a third flowchart of a method for transmitting and processing media content according to an embodiment of the present invention;
FIG. 6 is a flowchart of a specific example of a method for transmitting and processing media content according to an embodiment of the present invention;
FIG. 7 is a schematic diagram of a process of processing media content by a live streaming server according to an embodiment of the present invention;
FIG. 8 is a flowchart of dynamically tailoring a sub-media segment by a live streaming server according to an embodiment of the present invention;
FIG. 9 is a schematic diagram of a specific example of discarding a frame based on frame priority to adapt to actual network conditions according to an embodiment of the present invention;
FIG. 10 is a schematic diagram of a process of processing media content after a content delivery network is introduced according to an embodiment of the present invention;
FIG. 11 is a schematic structural diagram of a live streaming encoder according to an embodiment of the present invention;
FIG. 12 is a schematic structural diagram of a server according to an embodiment of the present invention;
FIG. 13 is a schematic structural diagram of a client side according to an embodiment of the present invention; and
FIG. 14 is a schematic diagram of architecture of a system for transmitting and processing media content according to an embodiment of the present invention.

### DETAILED DESCRIPTION

To make the objective, technical solutions, and advantages of embodiments of the present invention more clear, the following describes embodiments of the present invention in combination with the accompanying drawings. It should be noted that the exemplary embodiments are merely for illustrating the present invention, rather than limiting the present invention.

To solve the issue of the end-to-end delay, shorten delays in such operations as initial playing, dragging, and quick channel switching of the client side, an embodiment of the present invention provides a method for transmitting and processing media content. According to the method, a series of sub-media segments corresponding to a media segment are generated, and the sub-media segments are actively pushed in real time, thereby improving real-time performance of media content transmission. According to the method for transmitting and processing media content provided in the embodiments of the present invention, in the case of no long-duration server buffering and client side initial buffering, quick and timely response and adjustment can be made to sharp changes of the network conditions.

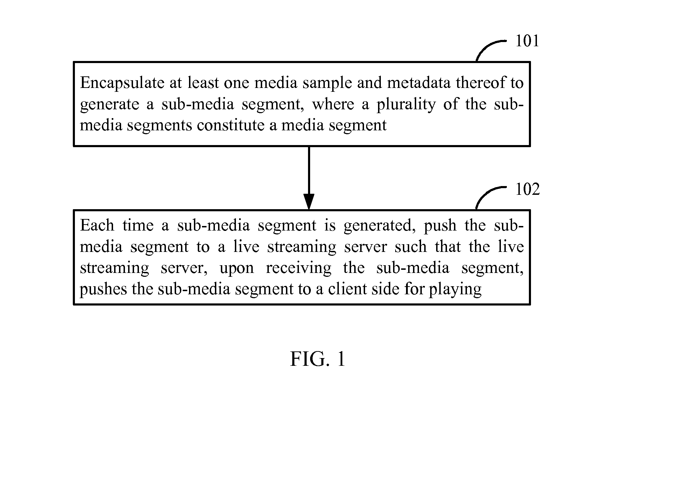

As shown in FIG. 1, a method for processing media content according to an embodiment of the present invention includes the following steps:
Step 101: Encapsulate at least one media sample and metadata thereof to generate a sub-media segment, where a plurality of the sub-media segments constitute a media segment.
Step 102: Each time a sub-media segment is generated, push the sub-media segment to a live streaming server such that the live streaming server, upon receiving the sub-media segment, pushes the sub-media segment to a client side for playing.

The procedures shown in FIG. 1 may be performed by an apparatus capable of implementing relevant functions. For example, the apparatus may be a live streaming encoder. This embodiment uses the live streaming encoder as an example for description.

In specific implementation, during generation of a sub-media segment, a media sample (sample) may be used as a minimum unit, and a sub-media segment may include one sample at minimum, or include a plurality of time-continuous samples, for example, PBB/BBP or PBBPBB/BBPBBP acquired from encoding of a video according to the MPEG specification (the number of B-frames included between each two P-frames may depend on encoding settings of the live streaming encoder). Herein, different video frames are briefly described as follows:
I-frame (intra coded picture, intra-frame coded frame): during decoding, a complete image can be reconstructed by using data of the I-frame only, where the I-frame may be typically used as a random access point. Information volume of the data of the I-frame is very large because the I-frame is a full-frame compression coded frame.

P-frame (predictive coded picture, forward prediction coded frame): the P-frame only refers to its closest preceding I-frame or P-frame. Due to residue transfer, the compression ratio of the P-frame is high.

B-frame (bidirectionally predictive coded picture, bidirectionally predictive coded frame): the B-frame is predicted by a preceding I/P-frame or a following P-frame, where prediction residue and motion vector between the B-frame and the preceding I/P-frame and prediction residue and motion vector between the B-frame and the following P-frame are transferred. Therefore, the compression ratio is the highest.

Generally, on average, the compression ratio of the I-frame is 7, the compression ratio of the P-frame is 20, and the compression ratio of the B-frame may reach 50, that is, the average data volume of the P-frame reaches 1/3 of that of the I-frame, and the average data volume of the B-frame reaches 1/7 of that of the I-frame.

As seen from the above description, although the use of I-frames increases the number of random access points, the compression ratio of the I-frames is the lowest, and thus the I-frames occupy more data. Therefore, it is unlikely to employ I-frames or I/P-frames for all video frames. Therefore, in GOP, generally only the basic frame (or the first frame) uses the I-frame, and in one GOP, only one I-frame is used, and the following frames are P-frames and N (N ≥ 0) B-frames between each two adjacent P-frames. A common frame sequence is, for example, "IBBPBBP... ", but the transmission and decoding sequence may be "IPBBPBB...".

In specific implementation, the plurality of sub-media segments constituting each media segment are generated by encapsulating at least one media sample of media content and the metadata thereof according to a format of the sub-media segments. This makes no change to the encoding and generation of an original sample, but makes a change to the encapsulation of the sample and the metadata thereof (the live streaming encoder does not need to split a media segment into a plurality of sub-media segments after generating the media segment in the original format, instead, directly encapsulates, according to the format requirement of the sub-media segments, one or a plurality of samples generated by encoding). Such plurality of sub-media segments are logically equivalent to one original media segment, that is, constitute one media segment as described in the present invention.

A first sub-media segment corresponding to the generated media segment may include media segment-level metadata. For example, the media segment-level metadata are included only in the first sub-media segment, and the following sub-media segments do not need to include the media segment-level metadata.

The sub-media segment including the media sample corresponding to a random access point includes the random access point. However, not all the sub-media segments are required to include the random access point.

Specifically, the plurality of sub-media segments constituting each media segment may be generated according to a set target duration or target media sample quantity. For example, the sub-media segments are generated based on the target duration of the sub-media segment in combination with the frame rate of the video stream. Assume that the target duration of the sub-media segment is 0.2 second, when the frame rate is 29.97 frames/second or 30 frames/second, each sub-media segment includes 6 consecutive video frames, and when the frame rate is 25 frames, each sub-media segment includes 5 consecutive video frames. The target duration herein may be other values, for example, a time-based metric unit 0.1 second, 0.3 second, or 0.5 second, or the target media sample quantity is considered, that is, a plurality of consecutive video frames using the frame number as a metric unit, for example, 3 frames, 6 frames, or 9 frames.

In an implementation, the durations of all the sub-media segments corresponding to the same media segment are not required to be absolutely the same, and tiny differences among the durations are allowed. In addition, the duration of the last sub-media segment may even be greatly different from the durations of other sub-media segments. If audio content and video content are respectively contained in different sub-media segments as required, different target durations or different target media sample quantities may be set for the generated sub-media segment containing the audio content and the generated sub-media segment containing the video content.

Transmission layer conditions may also be considered during generation of the sub-media segments. For example, because the HTTP bottom layer uses the TCP/IP transmission protocol, the maximum segment size (Maximum Segment Size, MSS) of the TCP may also be considered.

For a clearer description of the specific implementation of the embodiments of the present invention, the following briefly describes related parts in the involved ISO base media file format (ISO/IEC 14496-12 specifications).
a) In the ISO base media file format, the File Type Box ('ftyp') is used to identify a file type, the Movie Box ('moov') is used to encapsulate and describe metadata presented by the entire media, and the Media Data Box ('mdat') is used to contain the corresponding media data (that is, content of samples such as the actual audio/video).
b) If a file includes a media segment (Movie Fragment), the Movie Extends Box ('mvex') needs to be included in the 'moov' Box to indicate a file reader (reader).
c) For a media segment, the 'moof' Box is used to encapsulate the corresponding meta data of the media segment; whereas media samples corresponding to the media segment are still encapsulated by using the 'mdat' Box. Herein a plurality of 'mdat' Boxes may be used in one file. With respect to each media segment, the corresponding 'mdat' Box may follow the 'moof' Box thereof. That is, each media segment is sequentially stored in the file in a format of 'moof' +'mdat'.
d) Important information included in 'moof' Box is briefly described as follows:
   Track Fragment Run Box ('trun'):
      a tr_flags-related bit is used to indicate whether data_offset and first_sample_flags are included, and indicate what description information is included in each sample;
      the number of described samples (sample_count);
      the data_offset and first_sample_flags that may appear according to the indication of the tr_flags;
      metadata for describing the sample: one or any combination of the sample_duration, sample_size, sample_flags, sample_composition_time_offset included according to the indication of the tr_flags, an array of the metadata includes totally sample_count members (that is, each sample has a metadata description information member directly corresponding thereto in the array);

Independent and Disposable Samples Box ('sdtp'): provides decoding dependency information between samples, and each sample has metadata description information directly corresponding thereto. This box serves the similar function as the sample_flags in the 'trun' Box. To be specific, if sample_flags information has been provided for each sample in the 'trun' Box, the 'sdtp' Box is not needed.

Track Fragment Header Box ('tfhd'): gives the identifier (track_ID) of a described track (Track), and may include duration, size, and flags values default in each sample.

Other Boxes included in 'moof' Box are not directly related to the specific samples.

The following briefly describes parts related to file format in the dynamic HTTP stream transmission specifications of the 3GPP (3rd Generation Partnership Project, 3rd Generation Partnership Project)/MPEG.
a) In the dynamic HTTP stream transmission solution, there are three types of different segments. Information (i.e., 'moov' Box) related to initialization of a media decoder on a client side may be placed in a dedicated initialization segment (Initialisation Segment). In this way, a group of media segments (Media Segment) do not need to repeatedly include the same initialization information; however, before the group of media segments are played, the corresponding initialization segment must be acquired first. Because such media segments do not include the 'moov' Box, they are incompatible with the original 3GPP file format. To enable the client side to correctly identify this new file format, the 3GPP/MPEG particularly extends a corresponding segment type Segment type Box ('styp'). In addition, another type of media segment including the initialization information is also included. This type of media segment is referred to as a self-Initialising media segment (Self-Initialising Media Segment).
b) One media segment may include one or a plurality of complete self-contained (self-contained) media segments. A complete self-contained media segment is defined as follows: one 'mdat' Box immediately follows one 'moof' Box, and the 'mdat' Box includes all media samples referenced by the 'trun' Box in the corresponding 'moof'.
c) In the 3GPP/MPEG, before the first 'moof' Box, some media segment-level metadata such as type information 'styp' or 'ftyp' and 'moov', index information Segment Index Box ('sidx'), and/or Sender Reference Time Box ('srft') may also be included. In the 'moof' Box, some media segment-level metatdata such as Track Fragment Adjustment Box ('tfad') and Track fragment decode time Box ('tfdt') may be included.

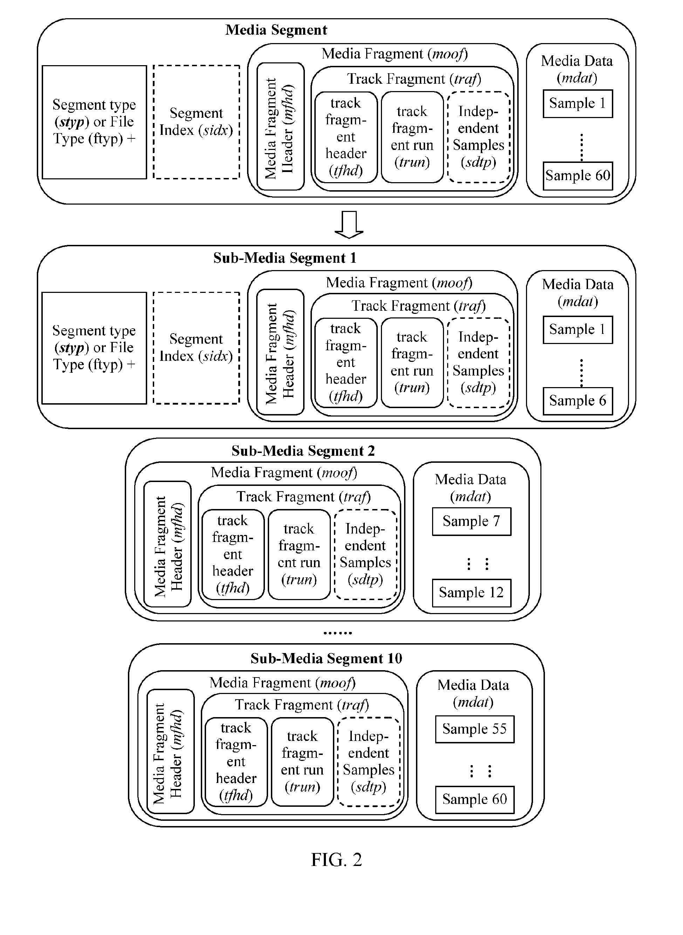

With respect to a media segment including a 2 second-duration GOP (Group of Pictures, group of pictures) and 60 frames, the following uses the DASH commission draft (ISO/IEC CD 23001-6) compliant with the MPEG as an example to describe generation of a series of sub-media segments having a target duration of 0.2 second constituting a media segment. FIG. 2 is a schematic diagram of generation of sub-media segments corresponding to a media segment according to the example.

In this example, a media segment originally to be generated needs to include media segment-level metadata such as 'styp' Box (or 'ftyp'+'moov' Box, and possible 'sidx'/'srft' Box, and the like), the value of the sample_count in the 'trun' Box is 60, and an array includes metadata information of totally 60 samples that are described in turn (if the 'sdtp' Box is included, metadata describing decoding dependency of the 60 samples are also included).

The acquired sub-media segments corresponding to the media segment in this example are as follows:
Only the first sub-media segment includes media segment-level metadata such as 'styp' Box (or 'ftyp'+'moov' Box, and possible 'sidx'/'srft' Box, and the like), the value of the sample_count in the 'trun' Box is 6, and the array includes metadata information of totally 6 samples, i.e., samples 1 to 6, that are described in turn (if the 'sdtp' Box is included, metadata describing decoding dependency of the 6 samples are also included).

In the second sub-media segment, media segment-level metadata are not included, instead 'moof'+'mdat' is directly included. The value of the sample_count in the 'trun' Box is 6, the array includes metadata information of totally 6 samples, i.e., samples 7 to 12, that are described in turn (if the 'sdtp' Box is included, metadata describing decoding dependency of the 6 samples, i.e., samples 7 to 12 are also included). The encoding of the third to tenth sub-media segments is similar to that of the second sub-media segment.

If the original 'moof' Box includes media segment-level metadata such as 'tfad' and/or 'tfdt' Box, the 'moof' Box in the first sub-media segment still needs to include the metadata information, which, however, does not necessarily need to be included in the second to tenth sub-media segments. Alternatively, second to tenth sub-media segments may absolutely not include the metadata information.

In this example, the live streaming encoder does not need to generate and output a media segment after 60 samples are acquired by encoding. Instead, the live streaming encoder may generate the first sub-media segment after acquiring the first 6 samples by encoding and push the first sub-media segment, and may generate the second sub-media segment after acquiring another 6 samples, i.e., samples 7 to 12 and push the second sub-media segment. This process continues until the tenth sub-segment is generated and pushed.

In the above example, a plurality of corresponding consecutive samples are encapsulated in each sub-media segment by using 'moof'+'mdat' Box, and the client side can directly identify and process the samples without any modification.

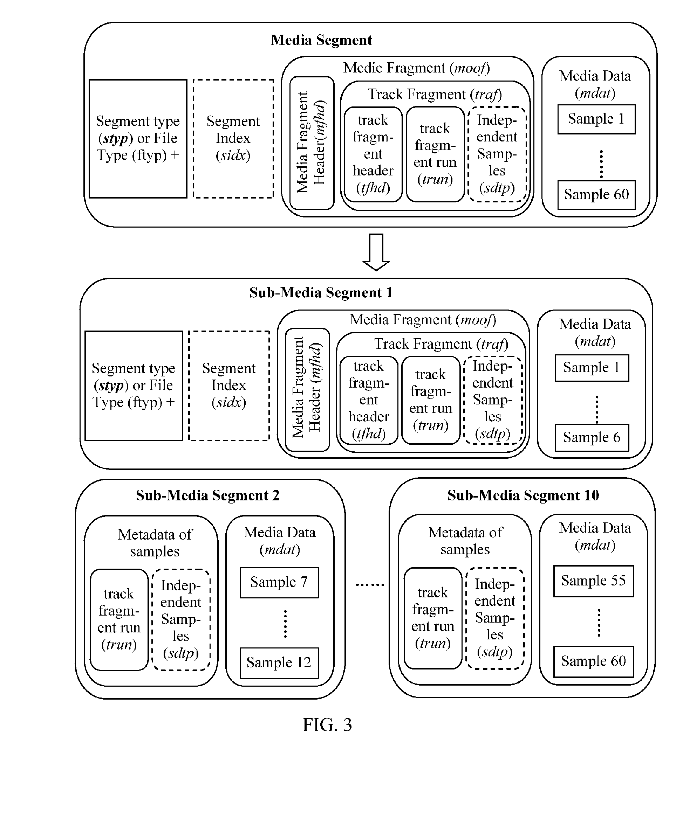

In another embodiment, if a sub-media segment includes samples on the same track only, the 'moof' Box may not be used, and instead, the 'trun' Box (and possible 'sdtp') is directed used to encapsulate metadata related to the samples. This avoids repeated use of some Boxes included in the 'moof' Box. However, in this case, the client side needs to be capable of identifying and supporting this new encapsulation format. FIG. 3 is a schematic diagram of another example of generation of a plurality of sub-media segments constituting a media segment in this embodiment. In this example, the principle of acquiring the sub-media segments by encoding is substantially the same as that illustrated in FIG. 2. This example is additionally described as follows:
The first sub-media segment is generated in the same manner as shown in FIG. 2.

In the second sub-media segment, metadata 'trun' (and possible 'sdtp') and 'mdat' describing the sample are directly included. The value of the sample_count in the 'trun' Box is 6, the array includes metadata information of totally 6 samples, i.e., samples 7 to 12, that are described in turn (if the 'sdtp' Box is included, metadata describing decoding dependency of the 6 samples, i.e., samples 7 to 12, are also included). The generation of encoding of the third to tenth sub-media segments is similar to that of the second sub-media segment.

FIG. 2 and FIG. 3 only show a method for generating sub-media segments by using a file format compliant with the 3GPP/MPEG dynamic HTTP stream transmission specifications. In the case of other file formats, implementation solutions, or specifications, generation of sub-media segments may not completely follow the examples illustrated in FIG. 2 and FIG. 3, but may refer to the principles thereof. For example, in some implementation solutions, the above media segment-level metadata does not need to be included in the generated first sub-media segment of a media segment; instead, a self-contained media segment ('moof'+'mdat' Box) is directly output. For encapsulation formats of other sub-media segments except the first sub-media segment, reference may be made to the encapsulation solutions of the sub-media segments as illustrated in FIG. 2 or FIG. 3. File formats as illustrated in FIG. 2 and FIG. 3 are ISO base media file formats. However, the splitting principle of the ISO base file format still applies to the MPEG-2 Transport Stream (TS) file format. To be specific, a group of TS packets (TS Packet) including a plurality of corresponding continuous samples are used as a sub-media segment, such that each of the original .ts files is converted into a plurality of corresponding sub-media segments (that is, smaller .ts files). For brevity, such embodiments are not described herein any further.

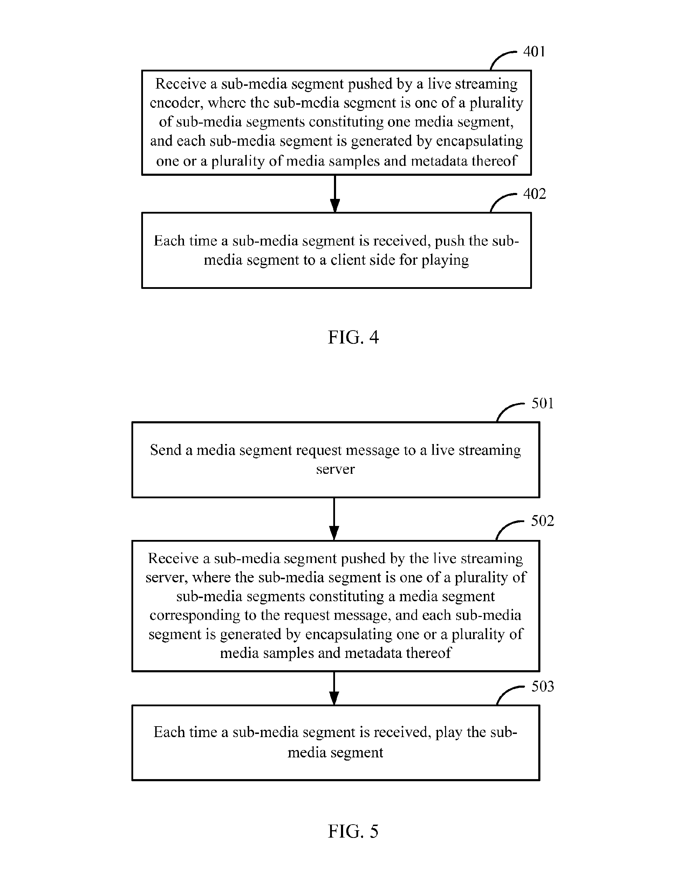

An embodiment of the present invention provides a method for transmitting and processing media content. As shown in FIG. 4, the method includes the following steps:
Step 401: Receive a sub-media segment pushed by a live streaming encoder, where the sub-media segment is one of a plurality of sub-media segments constituting one media segment, and each sub-media segment is generated by encapsulating at least one media sample and metadata thereof.
Step 402: Each time a sub-media segment is received, push the sub-media segment to a client side for playing.

Alternatively, prior to pushing the sub-media segment to the client side for playing, the method further includes: dynamically tailoring the received sub-media segment according to network transmission conditions; or dynamically controlling a pushing rate of the sub-media segment.

Alternatively, the dynamically tailoring includes: discarding a frame based on a frame priority; and/or for a media sample containing a sub-sample structure, tailoring the sub-sample with reference to a priority thereof and information indicating whether discarding is needed; and/or when H.264 encoding is used, discarding an NAL unit based on importance indication information of a network abstraction layer NAL.

Alternatively, the pushing the sub-media segment to a client side for playing includes: if the client side indicates in a request message that chunked encoding transfer of the HTTP protocol is supported, pushing the sub-media segment to the client side by using the chunked encoding transfer.

Alternatively, when a content delivery network is used, the pushing the sub-media segment to a client side for playing also includes: pushing, by using an edge server of the content delivery network, the sub-media segment to the client side for playing.

The procedures shown in FIG. 4 may be performed by an apparatus capable of implementing relevant functions. For example, the apparatus may be a live streaming server, or an edge server of a content delivery network. This embodiment uses a live streaming server as an example for description.

An embodiment of the present invention provides a method for transmitting media content. As shown in FIG. 5, the method includes the following steps:
Step 501: Send a media segment request message to a live streaming server.
Step 502: Receive a sub-media segment pushed by the live streaming server, where the sub-media segment is one of a plurality of sub-media segments constituting a media segment corresponding to the request message, and each sub-media segment is generated by encapsulating at least one media sample and metadata thereof.
Step 503: Each time a sub-media segment is received, play the sub-media segment.

The procedures shown in FIG. 5 may be performed by an apparatus capable of implementing relevant functions. For example, the apparatus may be a client side. This embodiment uses a client side as an example for description.

It can be seen based on the above embodiment that, in the embodiments of the present invention, the basic unit requested by the client side is still the media segment. That is, the original MPD (Media Presentation Description, media presentation description) and the update mechanism thereof are still used, and the original number of HTTP request messages may be maintained. The live streaming encoder does not need to push media segments to the live streaming server (Live Streaming Server) after a complete media segment is generated, instead, once at least one sample is generated by encoding, pushes the generated sub-media segment to the live streaming server, that is, a plurality of sub-media segments constituting one media segment are generated and pushed to the live streaming server multiple times; the live streaming server processes the sub-media segments pushed by the live streaming encoder, and once a sub-media segment arrives, actively pushes the sub-media segment to the client side requesting the corresponding media segment in real time; upon requesting a media segment, the client side receives the sub-media segments constituting the media segment pushed by the live streaming server multiple times, and once one or a plurality of sub-media segments are received, plays the received sub-media segments, instead of starting playing after all the sub-media segments constituting the media segment have been received.

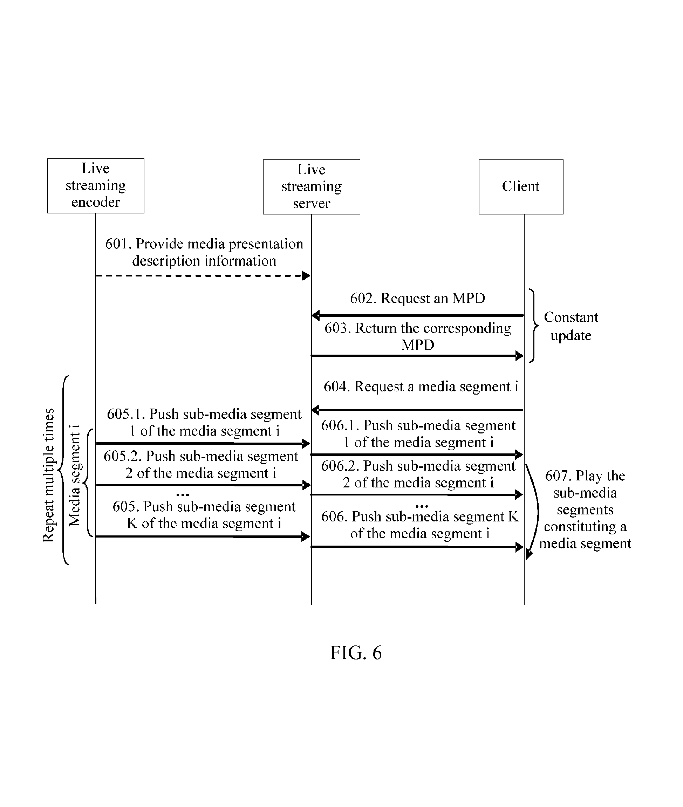

The following uses an example to describe a process of transmitting and processing media content according to an embodiment of the present invention. As show in FIG. 6, the method for transmitting media content according to this embodiment includes the following steps:
Step 601: A live streaming encoder provides an MPD for a live streaming server, or provides information that can be used for generating an MPD to the live streaming server, such as media type, bit rate, encoding format, resolution, frame rate, audio channel, sampling frequency, specific parameters needed for decoding, where the information may further include information indicating that a plurality of sub-media segments constitute one media segment.
Steps 602 to 603: A client side requests an MPD from the live streaming server; the live streaming server returns the MPD corresponding to the request. Because the MPD is updatable, steps 602 and 603 may be repeated multiple times according to actual requirements.
Step 604: The client side, according to URL (Uniform Resource Locator, uniform resource locator) information of the ith media segment, constructs a media segment request message and sends the request message to the live streaming server, where i may be related to time, or related to an index number in a Representation. If the client side supports chunked transfer encoding (Chunked Transfer Coding) of the HTTP protocol, such support needs to be specified in the request message.
Step 605: The live streaming encoder generates the plurality of sub-media segments constituting a media segment one by one, and pushes the respective sub-media segment generated to the live streaming server immediately.
Step 606: The live streaming server, upon receiving the sub-media segment, immediately pushes the received sub-media segment to the client side that requests the media segment.
Step 607: The client side, upon receiving part of the sub-media segments (one or more), starts playing the media content, instead of starting playing after all the sub-media segments constituting the media segment have been received. Before the first media segment is played on the client side, initial buffer content with a specific duration may need to be filled in a buffer area of the client side. The initial buffer duration may be shorter than the duration of the media segment. No additional restriction condition is set for playing of the subsequent other media segments.
Steps 604 to 607 may be repeated multiple times according to actual requirements.

In specific implementation, the live streaming encoder may also provide information indicating that a plurality of sub-media segments constitute one media segment, and the live streaming server identifies, according to the indication information, that the live streaming encoder outputs the plurality of sub-media segments constituting the media content, then, upon receiving each of the plurality of sub-media segments, and immediately pushes the sub-media segment to the client side requesting the corresponding media segment. Specifically, prior to pushing the sub-media segment, the live streaming encoder may provide the information indicating that a plurality of sub-media segments constitute one media segment. For example, the information provided in step 601 includes the indication information. The live streaming server may receive the indication information prior to receiving the sub-media segment. When pushing the sub-media segment, the live streaming encoder may also contain the indication information in a chunk including the sub-media segment. When receiving the sub-media segment, the live streaming server may acquire the indication information from the chunk of the received sub-media segment, and then perform identification.

In specific implementation, the live streaming encoder may push a sub-media segment to the live streaming server in various manners. For example, the live streaming encoder pushes the sub-media segment in the manner of file sharing, internal bus, or method invocation; or pushes the sub-media segment by using the chunked encoding transfer of the HTTP protocol.

For example, if the live streaming encoder and the live streaming server are deployed on the same server, the generated sub-media segments may be stored in turn in the manner of file sharing, or may be pushed to the live streaming server in the manner of internal bus or method invocation. If the live streaming encoder and the live streaming server are deployed independently, each of the sub-media segments is pushed as an HTTP chunk (chunk) to the live streaming server over an HTTP POST/PUT request message in the manner of the chunked transfer encoding.

If the live streaming encoder originally pushes each of the media segments as a chunk to the live streaming server in the manner of the chunked transfer encoding, the live streaming server may identify which chunks include sub-media segments pertaining to the same media segment in one (or any combination) of the following manners:
1) The sequence number of a current sub-media segment in the sub-media segments corresponding to a media segment is added to each chunk (chunk-extension or chunk-data). For example, if 10 sub-media segments constitute one media segment, information added to each of the chunks is sequentially 1/10, 2/10, ..., 10/10.
2) The same HTTP POST-PUT message is used for each of a plurality of sub-media segments constituting the media segment. The server associated all chunks received over the HTTP POST/PUT message with one media segment.
3) If the information provided by the live streaming encoder to the live streaming server in Step 601 does not include information indicating generation of the sub-media segments corresponding to the media segment, the live streaming server parses each chunk, and determines the first sub-media segments constituting different media segments (and uses the first sub-media segments as borders separating different media segments) by determining whether the sub-media segments include media segment-level metadata (for example, whether the 'styp'/'ftyp+'moov' Box is included).
4) Start indication information of a media segment is included in a chunk including the first sub-media segment of a media segment. For example, the indication information (for example, "FirstChunk = true") may be carried in the chunk-extension or chunk-data. In addition, end indication information (for example, "LastChunk = true") of the media segment may be included in a chunk including the last sub-media segment of the media segment.

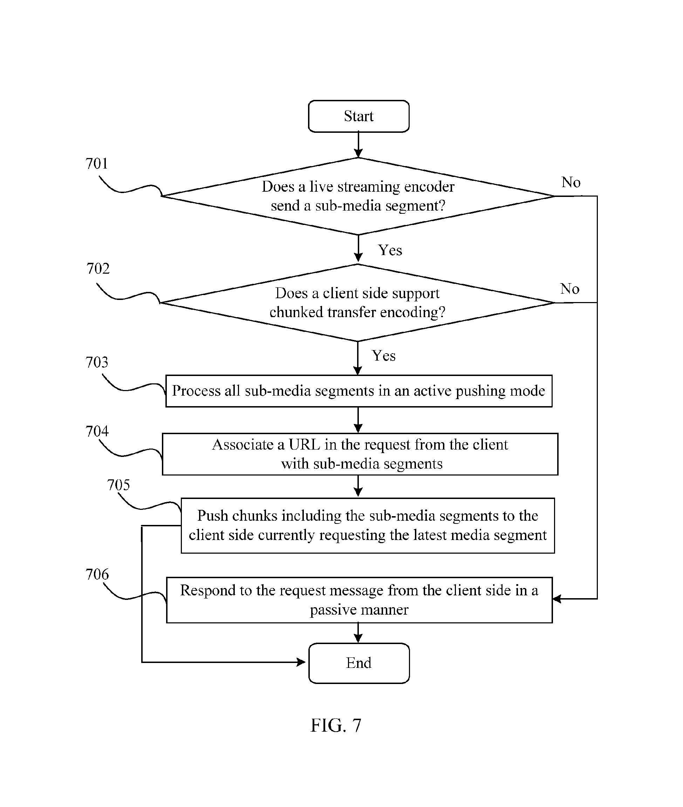

The process of identifying and processing a sub-media segment by a live streaming server is described using an example. As shown in FIG. 7, the process may include the following steps:
Step 701: A live streaming server identifies whether a live streaming encoder generates a plurality of sub-media segments corresponding to a media segment. For example, such identification may be made by identifying whether information provided by the live streaming encoder includes information indicating generation of sub-media segments corresponding to a media segment, and/or by identifying whether a received chunk includes information indicating that a plurality of sub-media segments constituting a media segment. If a media segment is not constituted by a plurality of sub-media segments, the process skips to step 706; otherwise, step 702 is performed.
Step 702: The live streaming server judges whether a client side supports the chunked transfer encoding. For example, such judgment may be made by judging whether a media segment request message sent by the client side includes information specifying support for the chunked transfer encoding. If the client side supports the chunked transfer encoding, step 703 is performed; otherwise, the process skips to step 706.
Step 703: The live streaming server processes all the sub-media segments constituting the media segment in a mode of active pushing.
Step 704: The live streaming server associates a URL in the media segment request message sent by the client side with the corresponding media segment (for example, under assistance of information such as an MPD/Manifest/play list provided by the server), and determines the corresponding sub-media segments constituting the media segment.
Step 705: The live streaming server actively pushes chunks including the plurality of sub-media segments constituting the media segment to the client side currently requesting the latest media segment (herein the latest media segment refers to a media segment that can be provided by the server and is closest to a live streaming event in terms of time, that is, the most real-time media segment). Upon receiving a first sub-media segment of a media segment i pushed by the live streaming encoder, the live streaming server immediately pushes the first sub-media segment of the media segment i to the client side by using HTTP chunks (chunk); and upon receiving a second sub-media segment of the media segment i pushed by the live streaming encoder, the live streaming server immediately pushes the second sub-media segment of the media segment i to the client side by using HTTP chunks (chunk). This process is repeated until the live streaming server pushes the last sub-media segment, that is, the kth sub-media segment of the media segment i to the client side. Finally, the live streaming server pushes the last chunk (a chunk with chunk size value 0) to notify the client side that all the sub-media segments constituting the requested media segment have been transmitted.
Step 706: The live streaming server responds to a request message from the client side in a passive manner. That is, after receiving the entire media segment, the live streaming server includes the complete media segment in the message body of an HTTP response message, and returns the response message to the client side.

In an environment of Internet (Internet), an unmanaged network (unmanaged network) cannot ensure stable quality of service; therefore, available bandwidths and/or network delay of the client side may suffer from fluctuations. The simplest method to address such fluctuations is to increase the buffer duration of the client side, which, however, accordingly increases the play starting delay of the client side. If the buffer duration of the client side is not increased, in the case of sharp changes of the available bandwidths, the client side may frequently buffer during the playing to acquire the desired media data, which, however, affects quality of user experience. In addition, mobile internet deployment and application are becoming wider and more universal. In an environment of mobile internet, because multi-user sharing manner is used, fluctuations of the available bandwidths are sometime sharper than those in the internet environment.

In the above embodiment, upon receiving the sub-media segments constituting each media segment pushed by the live streaming encoder, the live streaming server immediately pushes the sub-media segments to the client side which requests the media segment, without any additional processing on the content of the sub-media segments. To accommodate the above-described sharp changes of network conditions, the live streaming server may, according to transmission conditions of a preceding or current media segment, or information such as transmission network conditions acquired in other ways, dynamically tailor (tailor) the sub-media segments to be transmitted, or the live streaming server dynamically controls the process and/or rate of pushing the sub-media segments. For example, a frame may be discarded based on the priority of different video frames (decoding dependency). To be specific, with respect to a media sample including sub-samples (sub-samples), the sub-samples may be tailored according to the priority of the sub-samples (subsample_priority) and (discardable) information indicating whether discarding is needed; and with respect to the H.264 encoding, an NAL unit may be discarded based on an importance flag bit of a network abstraction layer (Network Abstraction Layer, NAL).

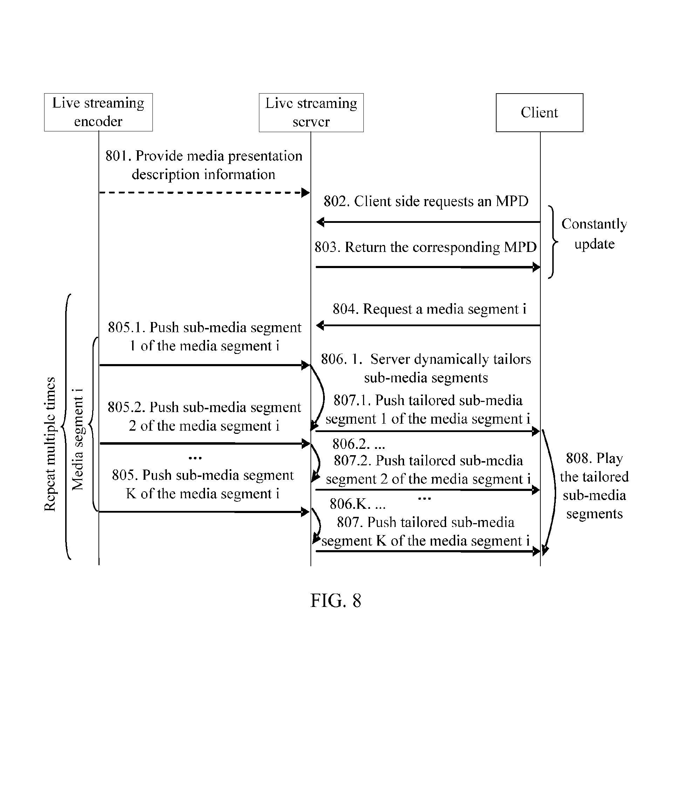

The following uses an example to describe specific implementation process of dynamically tailoring sub-media segments of a media segment by a live streaming server. As shown in FIG. 8, the process is briefly described as follows:
Steps 801 to 805 are the same as steps 601 to 605 in FIG. 6.
Step 806: A live streaming server dynamically tailors (tailor) sub-media segments, or dynamically controls the process and/or rate of pushing the sub-media segments.

Herein, the dynamic tailoring performed by the live streaming server may include selectively discarding a frame, selectively discarding a sub-sample of a media sample, selectively discarding an NAL unit in the H.264 encoding. Selectively discarding frames is to save bandwidths to ensure that other selected frames are timely transmitted to a receiving end for playing, by actively discarding some frames when media data to be transmitted requires larger bandwidths than current available bandwidths. The policies used for selectively discarding frames based on the network conditions and frame priority are concluded as follows:
a) An I-frame has the highest priority, and decoding of an entire GOP depends on the I-frame; the priority of a P-frame ranks second, the P-frame is related to the position thereof in the GOP, and the closer the P-frame to the front part in the GOP, the higher its importance; and a B-frame has the lowest priority.
b) During selective frame discarding, the B-frame with the minimum importance is firstly discarded, then the P-frame which is closer to the rear part in the GOP is discarded, and the I-frame is finally discarded.
c) An even distance needs to be maintained between the discarded frames. For example, one B-frame is discarded from each two B-frames (or two B-frames are discarded from each three B-frames).

Step 807: The live streaming server pushes the tailored sub-media segments to the client side requesting the media segment constituted by the sub-media segments.

Step 808: The client side, upon receiving part of the sub-media segments (one or more) of the media segment, starts playing the media content, instead of starting playing after all the sub-media segments constituting the media segment have been received. Before the first media segment is played on the client side, initial buffer content with a specific duration may need to be filled in the buffer area of the client side. The initial buffer duration may be shorter than the duration of the media segment. No additional restriction condition is set for playing of the subsequent other media segments.

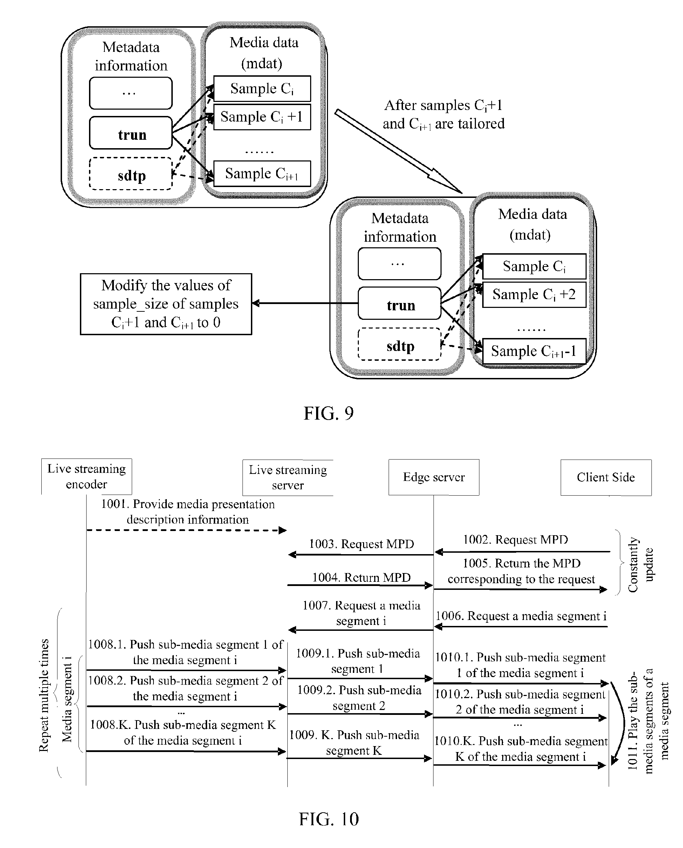

FIG. 9 is a schematic diagram of an example of discarding a frame based on frame priority to adapt to actual network conditions. The procedures in FIG. 9 are briefly described as follows:
A live streaming server may decide specific tailor processing according to transmission conditions of the sub-media segments corresponding to a media segment, or information such as network transmission conditions additionally acquired in other ways (for example, by using a corresponding network condition query interface provided by a wireless base station, and the like), and with reference to a selective frame discarding algorithm. Such tailor processing is directed to a specific client side and network conditions or available bandwidth directly related to the client side.

After determining the frames to be discarded in the sub-media segments, the live streaming server tailors the sub-media segments, re-organizes the samples included in the Media Data Box ('mdat'), that is, deletes content of the frames to be discarded, and remains only the frames selected for remaining. In addition, metadata information describing the discarded frames is modified in the 'trun' Box. For example, the value of the sample_size is modified to 0.

The live streaming server re-encapsulates the metadata information and media samples after tailoring into new sub-media segments, and pushes the sub-media segments to the client side requesting the corresponding media segment constituted by the sub-media segments by using HTTP chunks.

The example in FIG. 9 illustrates selectively discarding of frames. With respect to the H.264 encoding, the dynamic tailoring based on NAL importance flag bit and actual network conditions may be implemented as follows:
During the discarding process, the live streaming server may not discard an entire video frame, instead discards some NAL units in a video frame according to importance indication information of the NAL units, which is similar to the selective frame discarding. To be specific, the Media Data Box ('mdat') only includes the frames selected for remaining and the important NAL units selected for remaining in the frames. The value of the sample_size of the tailored frame in 'trun' Box is modified to an actual value. To be specific, if the entire frame is discarded, the value of the sample_size thereof is modified to 0; otherwise, the value of the sample_size thereof is modified to an actual size of the frame acquired after tailoring. Sub-samples of the media sample may also be selectively discarded similarly.

In the above embodiments, the case where the live streaming server directly provides services for the client side is used as an example for description. Currently, in actual network deployment, a content delivery network (Content Delivery Network, CDN) has been widely applied to implement content speedup for a content provider/service provider (Content Provider, CP/Service Provider, SP), and even provides dynamic content speedup. Therefore, an edge server (Edge Server) of the CDN may also provide service for the client side, and the live streaming server does not provide service directly for the client side. The following uses an example to describe a process of transmitting and processing media content after a CDN is introduced. As shown in FIG. 10, the process includes the following steps:
Step 1001: is the same as step 601 in FIG. 6.
Step 1002: Because CDN speedup is employed, a client side sends a live streaming MPD request to an edge server.
Step 1003: Upon receiving the live streaming MPD request from the client side, if the edge server does not cache the currently latest valid MPD, the edge server requests the latest MPD from a live streaming server.
Step 1004: The live streaming server returns the currently latest live streaming MPD.
Step 1005: The edge server returns the live streaming MPD corresponding to the request to the client side. The live streaming MPD is updatable. Therefore, steps 1002 to 1005 may be repeated multiple times according to actual requirements.
Step 1006: The client side, according to URL information of a media segment i, constructs a media segment request message and sends the request message to the edge server, where i may be related to time, or related to an index number in a Representation. If the client side supports chunked transfer encoding of the HTTP protocol, such support needs to be specified in the request message.
Step 1007: If the edge server does not cache the media segment i, and has not sent a request for the media segment i to the live streaming server, the edge server sends a request message for the media segment i to the live streaming server, where the request message indicates that the chunked transfer encoding is supported.
Step 1008: is the same as step 605 in FIG. 6.
Step 1009: is similar to step 606 in FIG. 6. The difference is that the entity receiving the sub-media segments is the edge server.
Step 1010: Upon receiving the sub-media segments corresponding to the media segment pushed by the live streaming server, the edge server immediately pushes the sub-media segments to the client side requesting the corresponding media segment.
Step 1011: is similar to step 607 in FIG. 6. The difference is that the client side receives the sub-media segments corresponding to the media segment from the edge server.
Steps 1006 to 1011 may be repeated multiple times according to actual requirements.

In the example shown in FIG. 10, the edge server does not dynamically tailor the sub-media segments. With reference to the examples shown in FIG. 8 and FIG. 9, an embodiment of dynamically tailoring the sub-media segments by the edge server as follows:
Upon receiving the sub-media segments constituting a media segment pushed by the live streaming server, and before pushing the sub-media segments to the client side requesting the corresponding media segment, the edge server dynamically tailors the sub-media segments according to network conditions, and encapsulates the tailored sub-media segments into an HTTP chunk and pushes the HTTP chunk to the client side.

In the above embodiments, the liver streaming encoder, the live streaming server, and/or the edge server all implement instant pushing of the sub-media segments by using chunked transfer encoding of the HTTP protocol. However, according to the present invention, implementation of the instant pushing is not limited thereto, and other transmission protocols or mechanism supporting active pushing may also be used. For example, WebSocket specifications in HTML 5 that are being formulated by W3C may also be subsequently used for pushing sub-media segments to a client side and/or server.

Based on the same inventive concept, embodiments of the present invention further provide a live streaming encoder, a server, a client side, and a system for transmitting and processing media content, as detailed in the following embodiments. The principles under which the apparatuses and the system solve the problem are similar to those of the method for processing media content. Therefore, for implementation of the apparatuses and the system, reference may be made to that of the method for processing media content, which is not described herein any further.

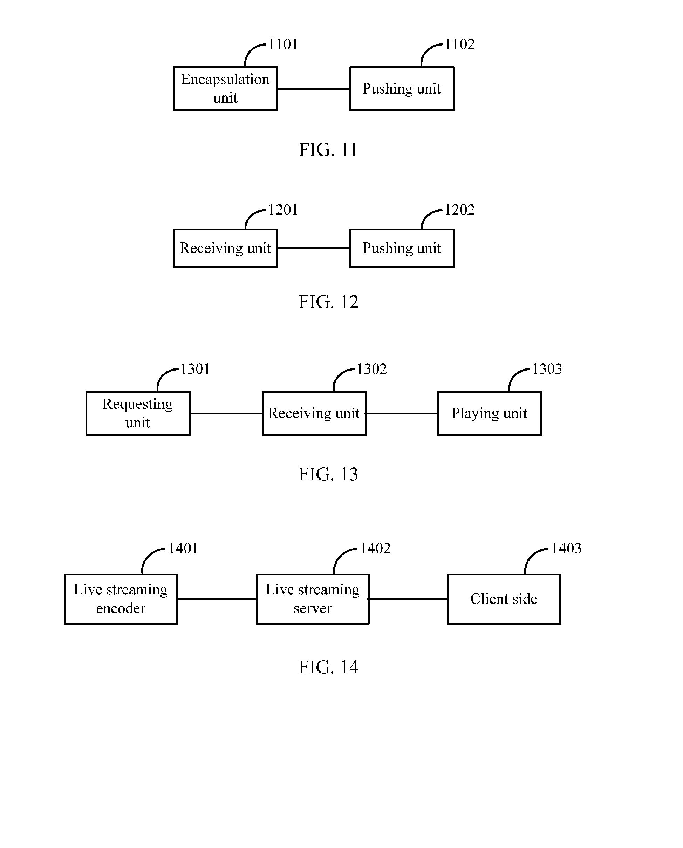

As shown in FIG. 11, a live streaming encoder according to an embodiment of the present invention may include:
an encapsulation unit 1101, configured to encapsulate at least one media sample and metadata thereof to generate a sub-media segment, where a plurality of the sub-media segments constitute a media segment; and
a pushing unit 1102, configured to: each time a sub-media segment is generated, push the sub-media segment to a live streaming server such that the live streaming server, upon receiving the sub-media segment, pushes the sub-media segment to a client side for playing.

In an embodiment, the encapsulation unit 1101 may be specifically configured to: if the sub-media segment needs to contain media segment-level metadata, contain the media segment-level metadata in a first generated sub-media segment.

In an embodiment, the encapsulation unit 1101 may be specifically configured to encapsulate media samples of media content and metadata thereof to generate a plurality of sub-media segments constituting a media segment.

In an embodiment, the encapsulation unit 1101 may be specifically configured to contain media segment-level metadata in a first generated sub-media segment corresponding to the media segment; and /or

The generated sub-media segment, which is a part of a media segment and includes media samples at the corresponding position of a random access point, contains the random access point.

In an embodiment, the encapsulation unit 1101 may specifically include: a segment setting unit, configured to set a target duration or a target media sample quantity for the sub-media segment; and an encapsulation processing unit, configured to encapsulate a media sample and metadata thereof to generate the sub-media segment satisfying the target duration or the target media sample quantity.

In an embodiment, the segment setting unit may be specifically configured to: if audio content and video content are respectively contained in different sub-media segments, set different target durations or different target media sample quantities for the sub-media segment containing the audio content and the sub-media segment containing the video content.

In an embodiment, the pushing unit 1102 may include:
a first pushing unit, configured to push the sub-media segment in a manner of file sharing, internal bus, or method invocation; or
a second pushing unit, configured to push the sub-media segment by using the chunked encoding transfer of the HTTP protocol.

In an embodiment, the live streaming encoder may further include: an indication unit, configured to: prior to pushing the sub-media segment to the live streaming server, provide information indicating that a plurality of sub-media segments constitute a media segment to the live streaming server; or contain the indication information when pushing the sub-media segment.

As shown in FIG. 12, a server according to an embodiment of the present invention may include:
a receiving unit 1201, configured to receive a sub-media segment pushed by a live streaming encoder, where the sub-media segment is one of a plurality of sub-media segments constituting a media segment, and each sub-media segment is generated by encapsulating at least one media sample and metadata thereof; and
a pushing unit 1202, configured to: each time a sub-media segment is received, push the sub-media segment to a client side for playing.

In an embodiment, the server shown in FIG. 12 may further include:
a pushing control unit, configured to dynamically tailor the received sub-media segment according to network transmission conditions; or dynamically control a pushing rate of the sub-media segment.

In an embodiment, the pushing control unit may be specifically configured to perform one or a plurality of the following operations:
discarding a frame based on a frame priority;
for a media sample containing a sub-sample structure, tailoring the sub-sample with reference to a priority of the sub-sample and information indicating whether discarding is needed; and
discarding an NAL unit of the H.264 encoding based on importance indication information of the NAL unit of the H.264 encoding.

As shown in FIG. 13, a client side in the embodiments of the present invention may include:
a requesting unit 1301, configured to send a media segment request message to a live streaming server;
a receiving unit 1302, configured to receive a sub-media segment pushed by the live streaming server, where the sub-media segment is one of a plurality of sub-media segments constituting a media segment corresponding to the request message, and each sub-media segment is generated by encapsulating at least one media sample and metadata thereof; and
a playing unit 1303, configured to: each time a sub-media segment is received, play the sub-media segment.

As shown in FIG. 14, a system for processing media content according to an embodiment of the present invention may include:
a live streaming encoder 1401, configured to: encapsulate at least one media sample and metadata thereof to generate a sub-media segment, where a plurality of the sub-media segments constitute a media segment; and each time a sub-media segment is generated, push the sub-media segment to a live streaming server;
a live streaming server 1402, configured to: receive the sub-media segment pushed by the live streaming encoder; and each time a sub-media segment is received, push the sub-media segment to a client side; and
a client side, configured to: send a media segment request message to the live streaming server; receive the sub-media segment pushed by the live streaming server, where the sub-media segment is one of a plurality of sub-media segments constituting a media segment corresponding to the request message; and each time a sub-media segment is received, play the sub-media segment.

When the live streaming encoder and the live streaming server are deployed in the same entity, the live streaming encoder pushes the sub-media segment to the live streaming server in a manner of file sharing, internal bus, or method invocation; and
when the live streaming encoder and the live streaming server are deployed in two independent entities, the live streaming server pushes the sub-media segment to the live streaming server by using the chunked encoding transfer protocol of the HTTP protocol or another protocol supporting active pushing.

In an embodiment, the system further includes a content delivery network deployed between the live streaming server and the client side, where the live streaming server pushes the sub-media segment of the media segment to the client side by using an edge server of the content delivery network.

Specifically, the edge server is configured to receive a media segment request message sent from the client side, and forward the media segment request message to the live streaming server; and receive a sub-media segment pushed by the live streaming server, and push the sub-media segment to the client side. The live streaming server is configured to receive the media segment request message forwarded by the edge server, receive the sub-media segment which corresponds to the media segment requested by the client side and is pushed by the live streaming encoder, and push the sub-media segment to the edge server.

In an embodiment, the edge server may be specifically configured to: upon receiving a sub-media segment pushed by the live streaming server, dynamically tailor the pushed sub-media segment according to the transmission conditions of the media segment or the acquired network transmission conditions, and push the dynamically tailored sub-media segment to the client side.

In conclusion, in the embodiments of the present invention, sub-media segments corresponding to each of the media segments of media content are generated, and are actively pushed. This improves real-time performance of media content transmission, solves the issue of the end-to-end delay, and shortens delays in such operations as client side initial playing, dragging, and quick channel switching. In the case of no long-duration server buffer/client side initial buffer, quick and timely response and adjustment can be made to sharp changes of the network conditions.

In embodiments of the present invention, basic units requested by the client side are still media segments, and the number of request messages remains the same as the original number, neither increasing processing workload of the client side and the server, nor reducing the effective load rate of HTTP messages. A time interval between two adjacent random access points is not shortened. Therefore, encoding efficiency will not be reduced and network transmission load will not be increased.

In addition, in embodiments of the present invention, the live streaming server (or the edge server) is capable of dynamically tailoring sub-media segments corresponding to a media segment according to transmission conditions of the media segment or other additionally acquired information, and then pushing the tailored sub-media segments to the client side. In this way, quick and timely response is made to adapt to sharp changes of the network conditions.

Those skilled in the art shall understand that the embodiments of the present invention may be described in terms of a method, a system, or a computer program product. Therefore, the present invention may be implemented by embodiments using pure hardware, pure software, or a combination of hardware and software. In addition, the present invention may also employ a computer program product that is implemented on one or a plurality of computer readable storage mediums (including but not limited to a magnetic disk storage device, a CD-ROM, and an optical storage device) including computer readable program code.

The present invention is described with reference to flowcharts and/or block diagrams of the method, apparatus (system), and computer program product according to the embodiments of the present invention. It can be understood that computer program instructions may be used to implement each process and/or block in the flowcharts and/or block diagrams, and a combination of processes and/or blocks in the flowcharts and/or block diagrams. These computer program instructions may be provided to a general computer, a dedicated computer, an embedded processor, or processors of other programmable data processing devices to generate a machine to enable the instructions executed by the computer or the processors of other programmable data processing devices to generate an apparatus for implementing functions defined in one or a plurality of processes in the flowcharts, and/or one block or a plurality of blocks in the block diagrams.

These computer program instructions may also be stored in a computer readable device capable of booting a computer or other programmable data processing devices to work in a particular manner, such that the instructions stored in the computer readable storage device, when being executed, generate a product including the instruction apparatus, where the instruction apparatus implements functions defined in one process or a plurality of processes in the flowcharts, and/or one or a plurality of blocks in the block diagrams.

These computer program instructions may also be loaded to the computer or other programmable data processing devices, such that a series of operations or steps are performed on the computer or other programmable devices to generate processing implemented on the computer, and the instructions executed on the computer or other programmable devices provides steps of implementing functions defined in one process or a plurality of processes in the flowcharts, and/or one block or a plurality of blocks in the block diagrams.

The above embodiments describe in detail the objectives, technical solutions, and beneficial effects of the present invention. It should be understood that these embodiments are for illustration purpose only, but the protection scope of the present invention is not limited thereto. Any modification, equivalent replacement, and improvement made within the spirit and principle of the present invention shall fall into the protection scope of the invention.

## Claims

1. A method for transmitting and processing media content, comprising:
encapsulating at least one media sample and metadata thereof to generate a sub-media segment, wherein a plurality of the sub-media segments constitute one media segment; and
each time one sub-media segment is generated, pushing the sub-media segment to a live streaming server such that the live streaming server, upon receiving the sub-media segment, pushes the sub-media segment to a client side for playing.

2. The method according to claim 1, wherein the encapsulating at least one media sample and metadata thereof to generate the sub-media segment comprises:
if the sub-media segment needs to contain media segment-level metadata, containing the media segment-level metadata in a first generated sub-media segment.

3. The method according to claim 1, wherein the encapsulating at least one media sample and metadata thereof to generate the sub-media segment specifically comprises:
setting a target duration or a target media sample quantity for the sub-media segment; and
encapsulating at least one media sample and metadata thereof to generate the sub-media segment satisfying the target duration or the target media sample quantity.

4. The method according to claim 3, wherein the setting the target duration or the target media sample quantity for the sub-media segment comprises:
if audio content and video content are respectively contained in different sub-media segments, setting different target durations or different target media sample quantities for the sub-media segment containing the audio content and the sub-media segment containing the video content.

5. The method according to claim 1, further comprising:
prior to pushing the sub-media segment to the live streaming server, providing indication information indicating that a plurality of sub-media segments constitute one media segment to the live streaming server; or containing the indication information when pushing the sub-media segment.

6. A method for transmitting and processing media content, comprising:
receiving a sub-media segment pushed by a live streaming encoder, wherein the sub-media segment is one of a plurality of sub-media segments constituting one media segment, and each sub-media segment is generated by encapsulating at least one media sample and metadata thereof; and
each time one sub-media segment is received, pushing the sub-media segment to a client side for playing.

7. The method according to claim 6, wherein prior to pushing the sub-media segment to the client side for playing, the method further comprises:
dynamically tailoring the received sub-media segment according to network transmission conditions; or dynamically controlling a pushing rate of the sub-media segment.

8. The method according to claim 7, wherein the dynamically tailoring comprises:
discarding a frame based on a frame priority; and/or
for a media sample containing a sub-sample structure, tailoring the sub-sample with reference to a priority thereof and information indicating whether discarding is needed; and/or
when H.264 encoding is used, discarding an NAL unit based on importance indication information of a network abstraction layer NAL.

9. The method according to claim 6, wherein the pushing the sub-media segment to the client side for playing comprises:
if the client side indicates in a request message that chunked encoding transfer of an HTTP protocol is supported, pushing the sub-media segment to the client side in a manner of the chunked encoding transfer.

10. The method according to claim 6, wherein when a content delivery network is used, the pushing the sub-media segment to the client side for playing further comprises:
pushing, by using an edge server of the content delivery network, the sub-media segment to the client side for playing.

11. A method for transmitting and processing media content, comprising:
sending a media segment request message to a live streaming server;
receiving a sub-media segment pushed by the live streaming server, wherein the sub-media segment is one of a plurality of sub-media segments constituting a media segment corresponding to the request message, and each sub-media segment is generated by encapsulating at least one media sample and metadata thereof; and
each time one sub-media segment is received, playing the sub-media segment.

12. A live streaming encoder, comprising:
an encapsulation unit, configured to encapsulate at least one media sample and metadata thereof to generate a sub-media segment, wherein a plurality of the sub-media segments constitute one media segment; and
a pushing unit, configured to: each time one sub-media segment is generated, push the sub-media segment to a live streaming server such that the live streaming server, upon receiving the sub-media segment, pushes the sub-media segment to a client side for playing.

13. The live streaming encoder according to claim 12, wherein:
the encapsulation unit is specifically configured to: when the sub-media segment needs to contain media segment-level metadata, contain the media segment-level metadata in a first generated sub-media segment.

14. The live streaming encoder according to claim 12, wherein the encapsulation unit comprises:
a segment setting unit, configured to set a target duration or a target media sample quantity of the sub-media segment; and
an encapsulation processing unit, configured to encapsulate at least one media sample and metadata thereof to generate the sub-media segment satisfying the target duration or the target media sample quantity.

15. The live streaming encoder according to claim 14, wherein:
the segment setting unit is specifically configured to: if audio content and video content are respectively contained in different sub-media segments, set different target durations or different target media sample quantities for the sub-media segment containing the audio content and the sub-media segment containing the video content.

16. The live streaming encoder according to claim 12, further comprising:
an indication unit, configured to: prior to pushing the sub-media segment to the live streaming server, provide indication information indicating that a plurality of sub-media segments constitute one media segment to the live streaming server; or contain the indication information when pushing the sub-media segment.

17. A live streaming server, comprising:
a receiving unit, configured to receive a sub-media segment pushed by a live streaming encoder, wherein the sub-media segment is one of a plurality of sub-media segments constituting one media segment, and each sub-media segment is generated by encapsulating at least one media sample and metadata thereof; and
a pushing unit, configured to: each time one sub-media segment is received, push the sub-media segment to a client side for playing.

18. The live streaming server according to claim 17, further comprising:
a pushing control unit, configured to dynamically tailor the received sub-media segment according to network transmission conditions; or dynamically control a pushing rate of the sub-media segment.

19. The live streaming server according to claim 17, wherein:
the pushing unit is specifically configured to: when the client side indicates in a request message that chunked encoding transfer of an HTTP protocol is supported, push the sub-media segment to the client side in a manner of the chunked encoding transfer.

20. The live streaming server according to claim 17, wherein when a content delivery network is used,
the pushing unit is further configured to push, by using an edge server of the content delivery network, the sub-media segment to the client side for playing.

21. A client side, comprising:
a requesting unit, configured to send a media segment request message to a live streaming server;
a receiving unit, configured to receive a sub-media segment pushed by the live streaming server, wherein the sub-media segment is one of a plurality of sub-media segments constituting a media segment corresponding to the request message, and each sub-media segment is generated by encapsulating at least one media sample and metadata thereof; and
a playing unit, configured to: each time one sub-media segment is received, play the sub-media segment.

22. A system for transmitting and processing media content, comprising:
a live streaming encoder, configured to: encapsulate at least one media sample and metadata thereof to generate a sub-media segment, wherein a plurality of the sub-media segments constitute one media segment; and each time one sub-media segment is generated, push the sub-media segment to a live streaming server;
the live streaming server, configured to: receive the sub-media segment pushed by the live streaming encoder; and each time one sub-media segment is received, push the sub-media segment to a client side; and
the client side, configured to: send a media segment request message to the live streaming server; receive the sub-media segment pushed by the live streaming server, wherein the sub-media segment is one of a plurality of sub-media segments constituting a media segment corresponding to the request message; and each time one sub-media segment is received, play the sub-media segment.

23. The system of claim 22, wherein:
when the live streaming encoder and the live streaming server are deployed in the same entity, the live streaming encoder pushes the sub-media segment to the live streaming server in a manner of file sharing, internal bus, and method invocation; and
when the live streaming encoder and the live streaming server are deployed in two independent entities, the live streaming server pushes the sub-media segment to the live streaming server by using chunked encoding transfer protocol of an HTTP protocol or another protocol supporting active pushing.

24. The system according to claim 22, further comprising: a content delivery network deployed between the live streaming server and the client side;
wherein the live streaming server pushes the sub-media segment to the client side by an edge server of the content delivery network.
